Europäisches Patentamt

European Patent Office

Office européen des brevets

(19)

(11) Numéro de publication: **0 014 931**
**B1**

(12) # FASCICULE DE BREVET EUROPEEN

(45) Date de publication du fascicule du brevet:
**20.07.83**

(21) Numéro de dépôt: **80100673.5**

(22) Date de dépôt: **11.02.80**

(51) Int. Cl.³: **H 01 M 4/58,** C 01 B 25/37,
C 01 B 25/38

(54) Générateur électrochimique à électrolyte non aqueux.

(30) Priorité: **16.02.79 FR 7904013**

(43) Date de publication de la demande:
**03.09.80 Bulletin 80/18**

(45) Mention de la délivrance du brevet:
**20.07.83 Bulletin 83/29**

(84) Etats contractants désignés:
**AT BE CH DE FR GB IT LU NL SE**

(56) Documents cités:
**FR-A-2 178 089**

**DIE NATURWISSENSCHAFTEN, vol. 16, Jg.50, 3,5,6, 1963, page 547 Springer Verlag Berlin-Göttingen-Heidelberg P.ROYEN et al.: «Darstellung einiger wasserfreier Cu-phosphate»**

(73) Titulaire: **GIPELEC S.A., 125, rue du Président Wilson, F-92302 Levallois-Perret (FR)**

(72) Inventeur: **Lecerf, André, 24, avenue Le Brix, F-35740 Pace (FR)**
Inventeur: **Caillaud, Thérèse, 80, rue de Vendeuvre Bellefois, F-86170 Neuville de Poitou (FR)**

(74) Mandataire: **Weinmiller, Jürgen et al, Zeppelinstrasse 63, D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Générateur électrochimique à électrolyte non aqueux

La présente invention concerne un générateur électrochimique à électrolyte non aqueux. Par électrolyte non aqueux, on entend aussi bien un électrolyte constitué par une solution liquide non aqueuse qu'un électrolyte solide à la température ordinaire. Dans le premier cas au moins, l'électrode négative du générateur peut être un métal alcalin tel que le lithium.

On connaît déjà par le document FR-A-2 178 089 un générateur électrochimique à électrolyte non aqueux, comportant une matière active positive constituée par du phosphate de cuivre, dont la formule est donnée dans le document, soit comme $Cu_3(PO_4)_2$ (tableaux 1 et 2), soit comme $Cu_3(PO_4)_2, 3H_2O$ (fig. 8). En fait il semble bien qu'il s'agisse de ce dernier composé, le composé anhydre n'étant signalé dans la littérature que par des études fondamentales, (M.C. BALL – Phase equilibrium relationship in the systems $CuO - P_2O_5$ and $Cu_2O - P_2O_5$. J. Chem. Soc. of London [A] 1968, pp. 1113–1115) pour lesquelles il n'a été obtenu qu'avec les plus grandes difficultés.

Or on connaît l'inconvénient d'utiliser des sels hydratés dans les piles dont l'électrode négative est constituée par un métal alcalin (le plus souvent du lithium). L'eau de cristallisation finit par s'attaquer au métal alcalin, et il en résulte une perte de capacité en conservation.

L'invention a pour but de proposer un générateur électrochimique dont la matière active positive est un sel oxygéné cuivrique qui soit facile à préparer à l'état anhydre, tout en se comportant électrochimiquement de façon adéquate.

Elle a pour objet un générateur électrochimique dont la matière active négative est constituée par un métal alcalin et dont l'électrolyte est une solution non aqueuse, caractérisé par le fait que la matière active positive est constituée par un oxyphosphate de formule $Cu_nO_p(PO_4)_2$, n étant un entier supérieur à 3 et inférieur ou égal à 6, et p étant égal à $n - 3$.

Il est à noter que de tels oxyphosphates sont en soi connus, par exemple à partir du périodique «Die Naturwissenschaften», vol. 16, 1963, p. 547, colonne de droite.

Cet oxyphosphate est obtenu par déshydratation d'un hydroxyphosphate de formule $Cu_2(OH)PO_4$.

Cet hydroxyphosphate existe à l'état naturel, la libethenite, mais peut être préparé très facilement et simplement par l'action de l'acide phosphorique sur l'oxyde de cuivre.

La déshydratation de l'hydroxyphosphate se produit à partir de 520 °C. Le temps de déshydratation (plusieurs heures) varie assez peu avec la température jusqu'à 700 °C. Les matériaux ainsi obtenus utilisés dans des piles ont donné des résultats de décharge qui variaient par contre selon la température de déshydratation. Ils sont mal cristallisés, d'autant plus mal que la température de déshydratation est plus basse.

Au-dessus de 700 °C au contraire, le produit est bien cristallisé et la vitesse de déshydratation est beaucoup plus grande, augmentant avec la température. Les composés obtenus à 900 °C par exemple ont été obtenus très rapidement (moins d'une heure pour 500 g de produit) et ont donné de bons résultats électriques, une fois utilisés dans des piles.

La décomposition de l'oxyphosphate se produit à partir de 1020 °C. La température de déshydratation ne doit donc pas dépasser 1000 °C.

Il est à noter que l'oxyphosphate obtenu par déshydratation à basse température (au-dessous de 700 °C) se transforme en un produit identique à celui qui est obtenu à haute température (au-dessus de 700 °C), s'il est chauffé à une température supérieure à 700 °C.

La matière active négative du générateur selon l'invention est un métal alcalin, de préférence le lithium, et l'électrolyte est une solution non aqueuse. Le solvant de l'électrolyte peut être choisi, soit parmi les éthers comme le tétrahydrofuranne, le diméthoxyéthane, le dioxolanne, soit parmi les esters comme le carbonate de propylène, le carbonate d'éthylène (ce dernier ne pouvant être utilisé qu'en solution puisqu'il est solide à la température ordinaire) ou le diméthylsulfite, soit parmi des mélanges des composés ci-dessus.

Le soluté de l'électrolyte peut avantageusement être le perchlorate de lithium. D'autres solutés également possibles sont le tétrafluoborate de lithium, l'hexafluoroarséniate de lithium, l'hexafluorophosphate de lithium, le trifluorosulfonate de lithium.

L'invention sera mieux comprise à l'aide de la description qui va suivre, de plusieurs exemples de réalisation, en regard des dessins annexés où:
— la fig. 1 représente la coupe d'un générateur électrochimique selon l'invention;
— la fig. 2 représente la courbe des tensions en fonction du temps d'un générateur selon l'invention;
— la fig. 3 représente une courbe analogue d'un autre générateur selon l'invention.

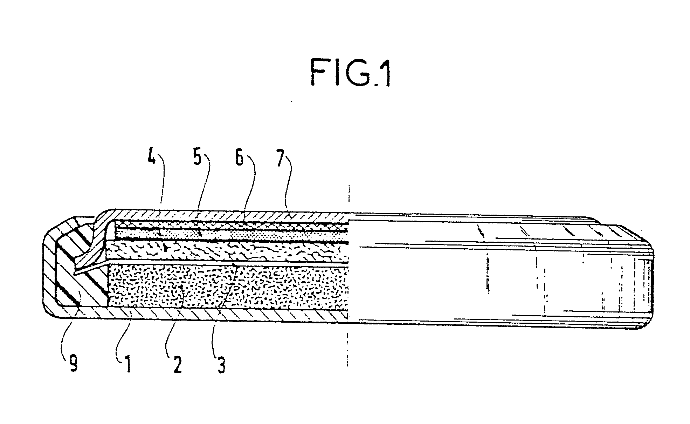

La fig. 1 représente un générateur électrochimique de type bouton. Les constituants actifs sont enfermés dans un boîtier constitué d'une part par une coupelle métallique 1 qui contient la masse active positive 2, et d'autre part par une coupelle métallique 7 qui contient la masse active négative 5 en lithium incrustée sur une grille de nickel 6 soudée à la coupelle 7. Les coupelles 1 et 7 sont emboîtées l'une dans l'autre et isolées électriquement l'une de l'autre par un joint isolant 9. La matière active négative 5 et la masse positive 2 sont séparées par une barrière 3 consistant en un film microporeux de polypropylène, et une épaisseur 4 de fibres de verre qui contient l'électrolyte.

Les dimensions hors tout du générateur sont 2,5 mm de hauteur et 25 mm de diamètre. La surface active est d'environ 3 cm².

La masse active positive a la composition suivante:

| oxyphosphate $Cu_4O(PO_4)_2$ | 86% |
| graphite | 10% |
| polytétrafluoréthylène | 4% |

725 mg de cette masse sont comprimés dans le compartiment cathodique, ce qui correspond à une capacité théorique de 290 mAh.

La quantité de lithium est choisie pour correspondre à la même capacité théorique.

L'électrolyte est une solution molaire de perchlorate de lithium dans un mélange de carbonate de propylène et de 1,2 diméthoxyéthane, à raison de 15 volumes du premier pour 14 volumes du second.

Comme cela est détaillé ci-dessous, on a préparé quatre lots d'oxyphosphate de cuivre que l'on a utilisé comme matière active positive dans des piles du type décrit ci-dessus (plusieurs par lot) qui ont été déchargées chacune sur une résistance de 5000 ohms.

1er exemple

A 250 cm³ d'acide phosphorique à 85% additionné d'une quantité d'eau distillée suffisante pour obtenir au moins 1 litre de solution, on a ajouté 537 g d'oxyde de cuivre CuO. Le mélange est chauffé à ébullition pendant environ 6 heures en agitant continuellement. La quantité d'eau est maintenue constante par un système à reflux. Après filtration, lavage à l'eau et séchage, on obtient 785 g d'hydroxyphosphate $Cu_2(OH)PO_4$. Cet hydroxyphosphate est ensuite chauffé à 600 °C pendant plus de 6 heures (jusqu'à poids constant) et on obtient un matériau de densité 4,48 qui est de l'oxyphosphate de cuivre $Cu_4O(PO_4)_2$.

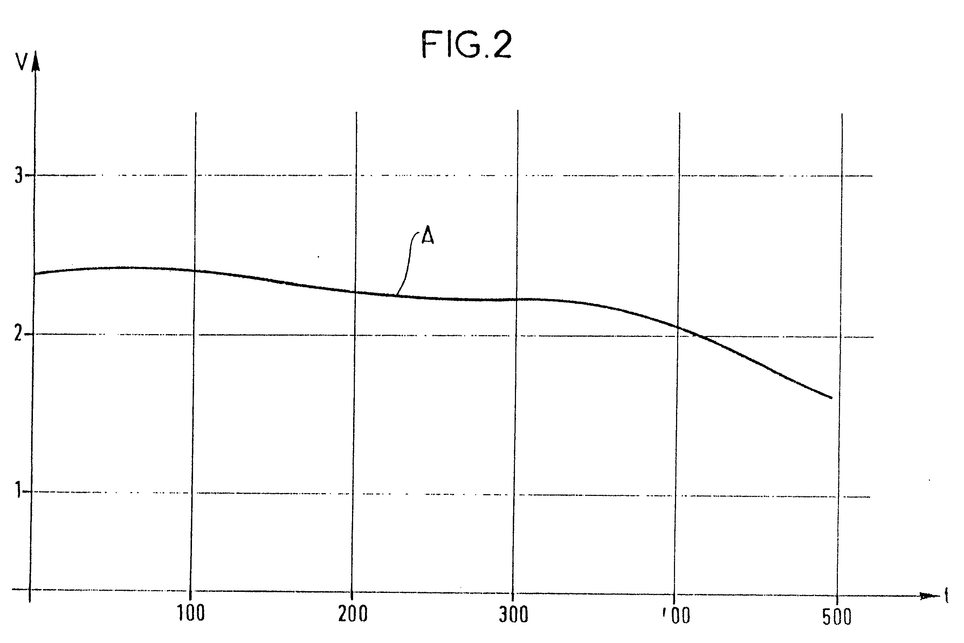

La fig. 2 représente la courbe de décharge A d'une pile comportant cette matière active positive et déchargée comme il a été dit plus haut. Les tensions (en volts) sont portées en ordonnées et le temps t (en heures) en abscisses. La capacité de cette pile est 205 mAh pour une tension d'arrêt de 1,8 volt, ce qui correspond à un rendement de 70%. La tension de la pile se répartit en deux paliers, le premier un peu supérieur à 2,4 volts et le second aux environs de 2,2 volts.

2e et 3e exemples

On a préparé de manière analogue deux autres lots d'oxyphosphate, mais en effectuant la déshydratation aux températures respectives de 590 et 620 °C. Les résultats des piles montées avec les matériaux obtenus sont moins bons que les résultats donnés dans le premier exemple, puisque pour les mêmes conditions de décharge on a obtenu des capacités respectives de 193 et 167 mAh. La courbe des tensions de décharge présente une pente assez accentuée entre environ 2,4 et 1,8 volts au lieu de se présenter par paliers. Il semble donc que la température de déshydratation de 600 °C donne une matière active de meilleure qualité que celle qui est obtenue à des températures supérieures ou inférieures.

4e exemple

Un lot d'oxyphosphate a été préparé de manière analogue, mais en déshydratant l'hydroxyphosphate à 900 °C, la déshydratation étant obtenue en moins d'une heure. L'oxyphosphate obtenu a une densité de 4,32.

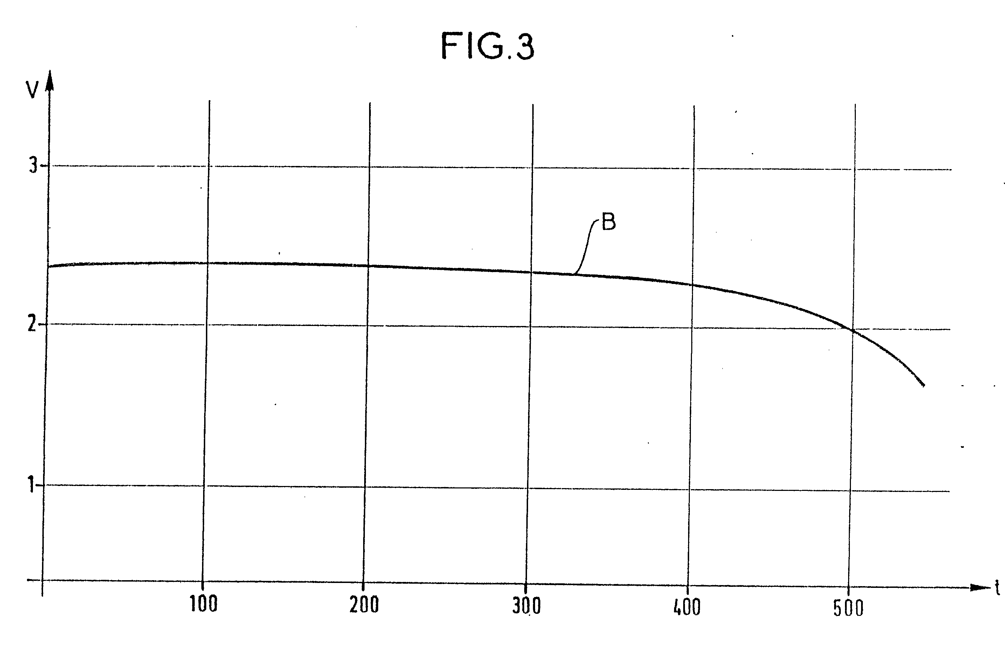

Une pile du type précédent a été préparée avec cet oxyphosphate. La fig. 3, analogue à la fig. 2, représente la courbe de décharge B de cette pile. La capacité obtenue a été de 242 mAh, ce qui correspond à un rendement de 83,4%. Pendant presque toute la décharge la tension se maintient légèrement au-dessous de 2,4 volts.

### Revendications

1. Générateur électrochimique dont la matière active négative est constituée par un métal alcalin et dont l'électrolyte est une solution non aqueuse, caractérisé par le fait que la matière active positive est constituée par un oxyphosphate de formule $Cu_nO_p(PO_4)_2$, n étant un entier supérieur à 3 et inférieur ou égal à 6, et p étant égal à $n - 3$.

2. Générateur électrochimique selon la revendication 1, caractérisé par le fait que l'oxyphosphate a pour formule $Cu_4O(PO_4)_2$.

3. Générateur électrochimique selon la revendication 1, caractérisé par le fait que ladite solution non aqueuse comporte en tant que solvant un composé choisi dans le groupe comprenant le tétrahydrofuranne, le dioxolanne, le diméthoxyéthane, le carbonate de propylène, le carbonate d'éthylène, le diméthylsulfite, et leurs mélanges.

4. Générateur électrochimique selon l'une des revendications 1 et 3, caractérisé par le fait que ladite solution non aqueuse comporte comme soluté un composé choisi dans le groupe du perchlorate de lithium, du tétrafluoborate de lithium, l'exafluorarséniate de lithium, l'exafluorophosphate de lithium, le trifluorosulfonate de lithium.

5. Générateur électrochimique selon l'une des revendications 3 et 4, caractérisé par le fait que ledit métal alcalin est le lithium.

### Claims

1. An electrochemical generator, the negative active material of which is constituted by an alkali metal and the electrolyte of which is a non-aqueous solution, characterized in that the positive active material is constituted by an oxyphosphate of the formula $Cu_nO_p(PO_4)_2$, n being an integer greater than 3 and inferior or equal to 6, and p being equal to $n - 3$.

2. An electrochemical generator according to claim 1, characterized in that the oxyphosphate has as formula $Cu_4O(PO_4)_2$.

3. An electrochemical generator according to claim 1, characterized in that said non-aqueous solution comprises as a solvent a compound chosen from the group including tetrahydrofuran, dioxolane dimethoxyethane, propylene carbonate, ethylene carbonate, dimethylsulphite and mixtures thereof.

4. An electrochemical generator according to one of the claims 1 and 3, characterized in that said non-aqueous solution comprises as a solute a compound chosen from the group containing lithium perchlorate, lithium tetrafluoborate, lithium hexafluorarseniate, lithium hexafluorophosphate, lithium trifluorosulfonate.

5. An electrochemical generator according to one of the claims 3 and 4, characterized in that said alkali metal is lithium.

## Patentansprüche

1. Elektrochemischer Generator, dessen negatives aktives Material aus einem Alkalimetall besteht und dessen Elektrolyt eine nichtwässrige Lösung ist, dadurch gekennzeichnet, dass das positive aktive Material aus einem Oxyphosphat der Formel $Cu_nO_p(PO_4)_2$ besteht, wobei n eine ganze Zahl grösser als 3 und kleiner oder gleich 6 ist, währed p gleich n − 3 ist.

2. Elektrochemischer Generator nach Anspruch 1, dadurch gekennzeichnet, dass das Oxyphosphat die Formel $Cu_4O(PO_4)_2$ hat.

3. Elektrochemischer Generator nach Anspruch 1, dadurch gekennzeichnet, dass die nichtwässrige Lösung als Lösungsmittel einen Stoff aufweist, der aus der Gruppe gewählt wird, die aus Tetrahydrofuran, Dioxolan, Dimethoxyäthan, Propylenkarbonat, Äthylenkarbonat, Dimethylsulfit und ihren Mischungen gebildet wird.

4. Elektrochemischer Generator nach einem der Ansprüche 1 und 3, dadurch gekennzeichnet, dass die nichtwässrige Lösung als gelösten Stoff einen Stoff aufweist, der aus der Gruppe ausgewählt wird, die Lithiumperchlorat, Lithiumtetrafluoborat, Lithiumhexafluorarseniat, Lithiumhexafluorphosphat, Lithiumtrifluorsulfonat enthält.

5. Elektrochemischer Generator nach einem der Ansprüche 3 und 4, dadurch gekennzeichnet, dass das genannte Alkalimetall Lithium ist.

# FIG.1

# FIG.2

0 014 931

# FIG.3

0 014 931